Europäisches Patentamt

European Patent Office

Office européen des brevets

(19)

(11) Veröffentlichungsnummer: **0 080 110**
A2

# (12) EUROPÄISCHE PATENTANMELDUNG

(21) Anmeldenummer: **82110342.1**

(22) Anmeldetag: **10.11.82**

(51) Int. Cl.³: **F 16 L 17/02, F 16 L 37/02**

(30) Priorität: **21.11.81 DE 3146272**

(43) Veröffentlichungstag der Anmeldung: **01.06.83**
**Patentblatt 83/22**

(84) Benannte Vertragsstaaten: **DE FR GB IT SE**

(71) Anmelder: **METZELER KAUTSCHUK GMBH,
Gneisenaustrasse 15, D-8000 München 50 (DE)**

(72) Erfinder: **Caspari, Horst, Poststrasse 50,
D-6800 Mannheim 41 (DE)**
Erfinder: **Janetzko, Dieter, Fred-Joachim
Schoeps-Strasse 31, D-6800 Mannheim 71 (DE)**
Erfinder: **Schröter, Klaus, Agnesstrasse 24,
D-6520 Worms (DE)**

(74) Vertreter: **Michelis, Theodor, Dipl.-Ing.,
Gneisenaustrasse 15, D-8000 München 50 (DE)**

(54) **Vorrichtung zur Anbringung eines Schlauches an einem Anschlussstück.**

(57) Zur Befestigung eines Schlauches, beispielsweise eines Krümmerschlauches eines Kraftfahrzeuges, auf einem rohrförmigen Anschlußstück ist der erweiterte Endbereich des Schlauches mit einem Dichtungselement aus Gummi versehen, das mehrere, nach innen ragende, schräg verlaufende Dichtungslippen aufweist. Der Innendurchmesser dieser Dichtungslippen ist kleiner als der Außendurchmesser des rohrförmigen Anschlußstückes, so daß sich eine kraftschlüssige Befestigung des Dichtungselementes auf der Außenfläche des rohrförmigen Anschlußstückes ergibt.

METZELER KAUTSCHUK GmbH    München, den 5.11.1982
MK 235 P 81 EP

Vorrichtung zur Anbringung eines Schlauches an
einem Anschlußstück

Die Erfindung betrifft eine Vorrichtung zur Anbringung des
Endes eines Schlauches an einem rohrförmigen Anschlußstück.

Die übliche Befestigung des Endes eines Schlauches an
einem rohrförmigen Anschlußstück erfolgt in der Weise,
daß eine Rohrschelle auf den Schlauch aufgesetzt und dann
das Ende des Schlauches auf das rohrförmige Anschlußstück
aufgezogen wird. Anschließend wird dann die Rohrschelle
angezogen, so daß der Schlauch kraftschlüssig auf dem Anschlußstück fixiert wird.

Dieses Aufbringungsverfahren ist jedoch sehr mühsam und umständlich, da hierzu mehrere Handgriffe erforderlich sind,
nämlich für das Aufschieben und die Befestigung der Schlauchschelle. Außerdem verformen sich die zur Herstellung der
Schläuche verwendeten Polymere, beispielsweise Gummi, unter
Belastung, d.h., diese Werkstoffe "kriechen" oder "fließen".
Diese verzögerte Einstellung des Gleichgewichtszustandes
eines viskoelastischen Materials wird auch als "Relaxation"
bezeichnet.

Im vorliegenden Fall, also für die Befestigung eines Schlauches mittels einer Schlauchschelle auf einem rohrförmigen
Anschlußstück, heißt das, daß sich bei konstanter Verformung, die durch das Anziehen der Schlauchschelle hervorgerufen wird, die Spannung des Schlauches verringert, bei

0080110

sonst gleichen Bedingungen also im Laufe der Zeit die Druckbeanspruchung abnimmt; in der Praxis heißt das, daß beispielsweise bei einem Krümmerschlauch eines Fahrzeugs nach kurzem Gebrauch die Schlauchschelle nochmals angezogen werden muß, da aufgrund der Belastung der Schlauch erst nach einiger Zeit einen Gleichgewichtszustand erreicht.

Wird die Schelle nicht angezogen, so wird die Verbindung Schlauch/Anschlußstück undicht, d.h., es tritt beispielsweise das Kühlwasser eines Kraftfahrzeugs aus. Dies führt häufig zu Reklamationen, die sich in aller Regel nur dadurch beseitigen lassen, daß beispielsweise bei der ersten Inspektion eines neuen Kraftfahrzeugs die Schlauchschelle nochmals angezogen wird. Dies stellt jedoch sicher nicht die optimale Lösung des erläuterten Problems dar.

Der Erfindung liegt deshalb die Aufgabe zugrunde, eine Vorrichtung zur abdichtenden Anbringung eines Schlauches an einem Anschlußstück der angegebenen Gattung zu schaffen, bei dem die oben erwähnten Nachteile nicht auftreten.

Insbesondere soll eine Vorrichtung vorgeschlagen werden, bei der die Befestigung des Schlauches keine Schwierigkeiten bereitet, insbesondere nicht die umständliche Montage und das erneute Anziehen einer Schlauchschelle nach kurzem Gebrauch erforderlich sind.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß nun nicht mehr die umständliche Anordnung einer Schlauchschelle erforderlich ist, sondern daß der Endbereich des Schlauches mit einem Dichtungselement versehen ist, das sich einerseits ohne große Probleme auf das rohrförmige Anschlußstück aufschieben läßt, andererseits jedoch eine selbsttätige Befestigungswirkung liefert. Denn die Dichtlippen des Dichtungselementes werden vom Innendruck des Schlauches beaufschlagt, so daß sie sich auf die Außenfläche des rohrförmigen Anschlußstückes pressen und dadurch kraftschlüssig gehalten werden. Gleichzeitig ergibt sich die angestrebte, gute Dichtungswirkung.

Weiterhin ist wesentlich, daß durch entsprechende Auslegung der Abmessungen von Anschlußstück, Dichtungselement und Schlauchende auch beim Kriechen der Materialien die angestrebte Abdichtung gewährleistet ist, wozu auch die "Labyrinth-Wirkung" der Dichtungslippen beiträgt. Außerdem kann das relativ kurze Dichtungselement aus einem elastomeren Material hergestellt werden, das nur eine relativ geringe Relaxation hat, wie es für die Herstellung des gesamten Schlauches nicht ohne weiteres möglich ist.

Dabei ist wesentlich, daß anders als bei der Verwendung von Schlauchschellen der Endbereich des Schlauches durch die Verwendung des Dichtungselementes nicht einer so starken Verformung unterworfen wird, also auch die entsprechende Relaxation relativ gering ist.

Dieses Dichtungselement wird zweckmäßigerweise in einem weiteren Arbeitsgang durch Transfer-Moulding im erweiterten Endbereich des Schlauches ausgebildet, so daß ein solcher Schlauch mit dem einstückig ausgebildeten Dichtungselement in den Handel gebracht werden kann. Bei der Montage des Schlauches, beispielsweise bei der Anbringung eines Krümmerschlauches an einem Vergaser oder einem Kühler eines Kraftfahrzeuges, muß dann nur noch der Endbereich des Schlauches auf das entsprechende, rohrförmige Anschlußstück aufgeschoben werden, um eine feste Verbindung herzustellen.

Als elastomeres Material für das Dichtungselement wird nach einer bevorzugten Ausführungsform Gummi mit einer Shore-A-Härte von 50 bis 70 verwendet, da dieses Material einerseits die gewünschte, feste Verbindung liefert und andererseits ausreichend beständig gegen die auftretenden Beanspruchungen ist.

Zweckmäßigerweise sind die Dichtungslippen schräg angeordnet, also entgegen der Abzugsrichtung des Schlauches von dem rohrförmigen Anschlußstück, so daß sich der Endbereich des Schlauches einerseits gut auf den Anschlußstutzen aufschieben läßt und andererseits die Dichtungslippen als Widerhaken dienen, also auch bei Belastung und Schwingungen, wie sie in Kraftfahrzeugen immer auftreten, das Abrutschen des Schlauches sicher verhindern.

Zur weiteren Unterstützung der Dichtwirkung der Dichtungslippen kann der erweiterte Endbereich des Krümmerschlauches durch eine Art Bandage umgeben sein, nämlich durch einen Ring aus einem zugfesten Material, so daß sich der Durchmesser des Rings und damit der Durchmesser des Schlauches nicht mehr ändert. Ein solcher Ring kann beispielsweise durch ein Gewebe, aber auch durch Polyamid oder eine Schrumpffolie gebildet werden. Dieser Ring verhindert eine Durchmesservergrößerung des erweiterten Endbereiches des Schlauches, wodurch die auf das rohrförmige Anschlußstück wirkende Andruckkraft erhöht und dadurch die Dichtungswirkung und der Sitz des Schlauches weiter verbessert werden.

Da in Achsrichtung mehrere, umlaufende Dichtungsrippen hintereinander angeordnet sind, entstehen mehrere Dichtungszonen, die insgesamt die bereits erwähnte "Labyrinth-Wirkung" haben; gleichzeitig verbessert sich auch der Kraftschluß zwischen der Außenfläche des Anschlußstücks und den Dichtungslippen.

Wenn die einzelnen Dichtungsrippen voneinander getrennt ausgebildet werden, muß zur Herstellung eines solchen Dichtungselementes ein Formwerkzeug mit einem Faltkern eingesetzt werden, um die Entformung zu ermöglichen.

Zur Erleichterung der Entformung ist es als Alternative hierzu auch möglich, eine einzige durchgehende Dichtungslippe zu verwenden, die sich wendelförmig über die Innenfläche des Dichtungselementes erstreckt. Diese Dichtungslippe kann mit einem entsprechenden, schraubenförmigen Formwerkzeug hergestellt werden, so daß zur Entformung nur einfach der Kern herausgeschraubt werden muß.

Die Erfindung wird im folgenden anhand von Ausführungsbeispielen unter Bezugnahme auf die beiliegenden, schematischen Zeichnungen näher erläutert. Es zeigen

Fig. 1   einen Schnitt durch den Endbereich eines Schlauches mit eingesetztem Dichtungselement,

Fig. 2   eine ähnliche Ansicht wie Fig. 1, jedoch mit einer anderen Ausführungsform des Dichtungselementes,

Fig. 3    die Ausführungsform nach Fig. 2, jedoch mit
          einer zusätzlichen Bandage, und

Fig. 4    im vergrößerten Maßstab den Bereich E von
          Fig. 2 .

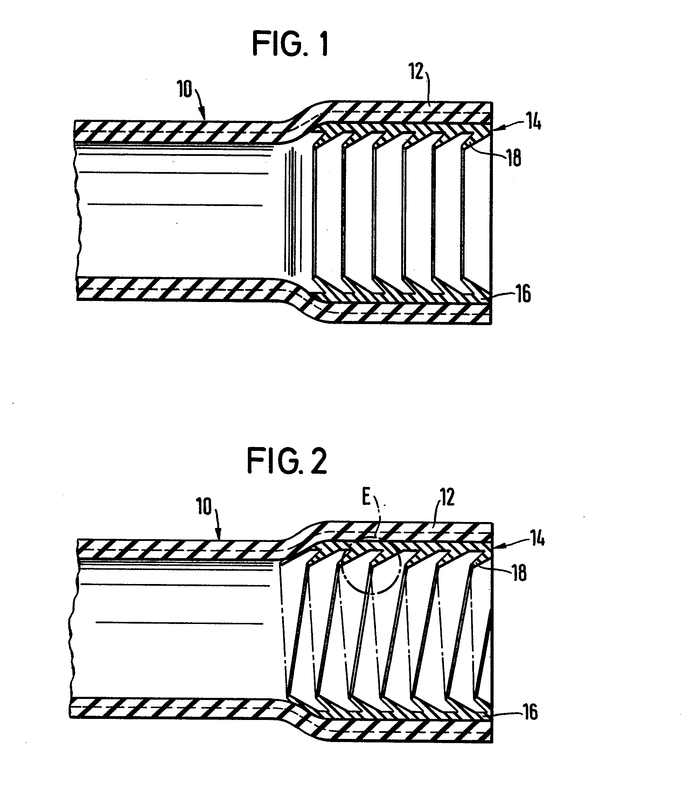

In Fig. 1 ist ein Schnitt durch einen Schlauch 10, beispielsweise einen Krümmerschlauch eines Kraftfahrzeuges, dargestellt, der mit einem erweiterten Endbereich 12 versehen ist. Das heißt, daß im Endbereich 12 der Innendurchmesser des Schlauches 10 größer ist als auf dem übrigen Teil seiner Länge.

In diesen erweiterten Endbereich 12 des fertigen Schlauches 10 wird durch ein Transfer-Moulding-Verfahren ein Dichtungselement 14 eingebracht, das aus einem ringförmigen Außenkörper 16 und nach innen ragenden Dichtungslippen 18 besteht. Dieses Dichtungselement 14 ist aus Gummi mit einer Shore-A-Härte von 50 bis 70 hergestellt.

Zur Anfertigung des Dichtungselementes 14 wird also der erweiterte Endbereich 12 des Schlauches 10 in einem entsprechenden Werkzeug mit einer Außenform und mit einem Formkern angeordnet und dann die unvulkanisierte Kautschukmischung eingespritzt, wodurch die gewünschte Form entsteht. Anschließend wird der Kautschuk in dem Formwerkzeug vulkanisiert, so daß das Dichtungselement 14 fest mit der Innenfläche des erweiterten Endbereiches 12 verbunden wird.

Wie man in Fig. 1 erkennen kann, sind die Dichtungslippen 18 von dem Ende des Schlauches 10 weg geneigt, also gegen die Abzugsrichtung des Schlauches 10 von dem nicht dargestellten, rohrförmigen Anschlußstück, so daß sie nach dem Aufschieben als Widerhaken dienen.

Die Innendurchmesser der ringförmigen Dichtungslippen 18 sind kleiner als der Außendurchmesser des rohrförmigen Anschlußstückes, so daß sich eine sehr feste und dauerhafte, kraftschlüssige Verbindung zwischen Dichtungselement 14 und dem rohrförmigen Anschlußstück ergibt.

In Fig. 1 sind mehrere, ringförmige Dichtungslippen 18 dargestellt, die jeweils getrennt voneinander und axial hintereinander angeordnet sind.

Fig. 2 zeigt eine Ausführungsform einer einzigen, durchgehenden Dichtungslippe 18, die sich wendelförmig über die gesamte Innenfläche des rohrförmigen Mantels 16 des Dichtungselementes 14 erstreckt. Diese wendelförmige Dichtungslippe 18 hat den Vorteil, daß sie durch einen entsprechenden, schraubenförmigen Kern hergestellt werden kann, zur Entformung also nur der Formkern herausgeschraubt werden muß.

Im Gegensatz hierzu ist bei der Ausführungsform nach Fig. 1 für die Entformung die Verwendung eines Faltkerns erforderlich.

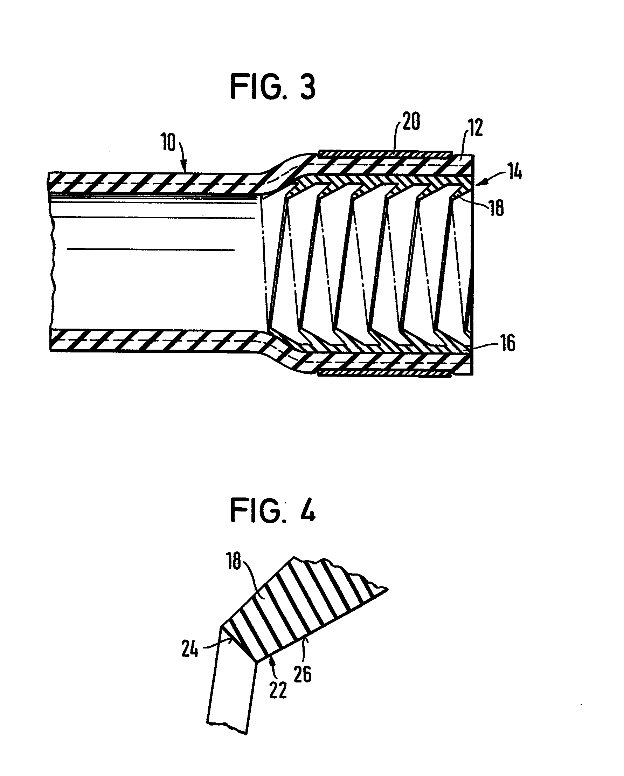

Fig. 4 zeigt im vergrößerten Maßstab den in Fig. 2 durch einen Kreis umgebenen Teil E, also das gemäß der Darstellung in Fig. 2 untere Ende einer Dichtungslippe 18. Es läßt sich erkennen, daß eine solche Dichtungslippe 18 etwa die Form einer Zacke hat, die jedoch keine Spitze, sondern einen abgestumpften Endbereich 22 aufweist. Dieser abgestumpfte Endbereich 22 wird durch eine Stirnkante 24 erreicht, die mit der unteren Kante 26 des Endbereiches 22 etwa einen Winkel von 90$^{\circ}$ bildet.

Fig. 3 zeigt schließlich noch eine Modifikation der Ausführungsform nach Fig. 2, bei der der erweiterte Endbereich 12 des Schlauches 10 durch einen Ring 20 aus einem zugfesten Material umgeben ist, also durch einen Ring, dessen Durchmesser sich auch unter der Einwirkung relativ starker Kräfte nicht vergrößert. Ein solcher Ring kann beispielsweise aus einem Gewebe, aber auch aus Polyamid , hergestellt werden. Sehr gute Ergebnisse wurden auch mit einem Ring aus einer Schrumpffolie erreicht, also aus einem Material, das sich unter der Einwirkung von Wärme zusammenzieht, wodurch es zu einer Verringerung des Durchmessers dieses Rings kommt. Ein Ring aus einer Schrumpffolie zieht sich also, beispielsweise unter der Einwirkung der normalen Betriebstemperaturen eines solchen Schlauches in einem Kraftfahrzeug , selbsttätig zusammen und erzeugt dadurch eine zusätzliche Andruckkraft. Wenn die Folie erst im Verlaufe des späteren Einsatzes eines solchen Schlauches schrumpft, kann sie außerdem die durch das Kriechen hervorgerufene Verformung des Schlauches kompensieren und dadurch zur Erzielung einer guten Abdichtung beitragen.

Dieser Ring 20 verhindert also eine Vergrößerung des Durchmessers des erweiterten Endbereiches 12 des Schlauches 10, so daß die Dichtungslippen 18 mit großer Kraft an der Außenfläche des rohrförmigen Anschlußstückes anliegen und damit die gewünschte kraftschlüssige Verbindung herstellen.

0080110

METZELER KAUTSCHUK GmbH            München, den 5.11.1982
                                   MK 235 P 81 EP

Patentansprüche

1. Vorrichtung zur abdichtenden Anbringung des Endes eines Schlauches an einem rohrförmigen Anschlußstück, d a d u r c h   g e k e n n z e i c h n e t , daß in den Endbereich (12) des Schlauches (10) ein ringförmiges, fest mit der Schlauchinnenwandung verbundenes Dichtungselement (14) aus elastomerem Material mit mehreren umlaufenden, nach innen ragenden Dichtungslippen (18) eingesetzt ist.

2. Vorrichtung nach Anspruch 1, dadurch gekennzeichnet, daß das Dichtungselement (14) aus Gummi, insbesondere mit einer Shore-A-Härte von 50 bis 70, besteht.

3. Vorrichtung nach einem der Ansprüche 1 oder 2, dadurch gekennzeichnet, daß das Dichtungselement (14) in den erweiterten Endbereich (12) des Schlauches (10) eingesetzt ist.

4. Vorrichtung nach mindestens einem der Ansprüche 1 bis 3, dadurch gekennzeichnet, daß die hintereinanderliegenden Dichtungslippen (18) wendelförmig umlaufend ineinander übergehen.

( MK 246 E 81 )

0080110

5. Vorrichtung nach mindestens einem der Ansprüche 1 bis 4,
dadurch gekennzeichnet, daß das Dichtungselement (14)
durch ein Transfer-Moulding-Verfahren in den Endbereich (12)
des Schlauches (10) eingesetzt ist.


6. Vorrichtung nach mindestens einem der Ansprüche 1 bis 5,
dadurch gekennzeichnet, daß die Dichtungslippen (14) von
dem Ende des Schlauches (10) weg, also gegen die Abzugsrichtung, geneigt sind.


7. Vorrichtung nach mindestens einem der Ansprüche 1 bis 6,
dadurch gekennzeichnet, daß der Innendurchmesser der Dichtungslippen (18) kleiner als der Außendurchmesser des Anschlußstückes ist.


8. Vorrichtung nach mindestens einem der Ansprüche 1 bis 7,
dadurch gekennzeichnet, daß die Dichtungslippen (18) einen
abgestumpften Endbereich (22) haben.


9. Vorrichtung nach mindestens einem der Ansprüche 1 bis 8,
dadurch gekennzeichnet, daß der Endbereich (12) des Schlauches (10) von einem Ring (20) aus zugfestem Material umgeben ist.


10. Vorrichtung nach Anspruch 9, dadurch gekennzeichnet,
daß der Ring (20) aus einem Gewebe, aus Polyamid oder aus
einer Schrumpffolie besteht.

0080110

## FIG. 1

## FIG. 2

0080110

# FIG. 3

# FIG. 4